# EUROPEAN PATENT APPLICATION

(11) **EP 4 621 819 A1**
(43) Date of publication of application: **24.09.2025**
(21) Application number: 23906624.4
(22) Date of filing: 28.11.2023
(51) Int. Cl.: H01G 4/30

(54) **LAYERED CERAMIC ELECTRONIC COMPONENT**

(30) Priority: 19.12.2022 JP 2022202676
(71) Applicant: Murata Manufacturing Co., Ltd., Nagaokakyo-shi, Kyoto 617-8555 (JP)
(72) Inventor: TSUBOKAWA, Daisho, Nagaokakyo-shi, Kyoto 617-8555 (JP); ITAMOCHI, Takeshi, Nagaokakyo-shi, Kyoto 617-8555 (JP); OOKAWA, Noriyuki, Nagaokakyo-shi, Kyoto 617-8555 (JP); MIYAZAKI, Tomochika, Nagaokakyo-shi, Kyoto 617-8555 (JP); HOSHINO, Yuuta, Nagaokakyo-shi, Kyoto 617-8555 (JP); NOMURA, Yoshiyuki, Nagaokakyo-shi, Kyoto 617-8555 (JP)
(74) Representative: Stöckeler, Ferdinand
(86) International application number: PCT/JP2023/042616
(87) International publication number: WO 2024/135256

(57) **Abstract**

Provided is a highly reliable layered ceramic electronic component capable of preventing cracks from occurring in a laminate of layered ceramic electronic components. A layered ceramic condenser 1 comprises an external electrode 40 which has: a first external electrode 40A having, from the bottom, a first base electrode layer 50A, a first organic layer 70A, and a first plating layer 60A; and a second external electrode 40B having, from the bottom, a second base electrode layer 50B, a second organic layer 70B, and a second plating layer 60B, wherein the surface of the first organic layer 70A is formed as a surface in which the first base electrode layer 50A is partially exposed, the surface of the second organic layer 70B is formed as a surface in which the second base electrode layer 50B is partially exposed, the atomic percentage of main component metal in the first base electrode layer 50A on the surface of the first organic layer 70A is 4.0 atomic% or less, and the atomic percentage of main component metal in the second base electrode layer 50B on the surface of the second organic layer 70B is 4.0 atomic% or less.

## Description

### TECHNICAL FIELD

The present invention relates to a multilayer ceramic electronic component.

### BACKGROUND ART

In the prior art, multilayer ceramic capacitors have been known as multilayer ceramic electronic components. In general, multilayer ceramic capacitors each include a multilayer body in which a plurality of dielectric layers and a plurality of internal electrode layers are alternately laminated, and external electrodes provided on both end surfaces of the multilayer body and connected to the internal electrode layers. For example, Patent Document 1 discloses a multilayer ceramic capacitor including the above-described configuration and terminal electrodes functioning as the external electrodes. The terminal electrodes each include a metal component and an inorganic bonding material, and a plurality of voids provided therein.

### Citation List

### Patent Document

Patent Document 1: Japanese Unexamined Patent Application, Publication No. H5-3132

### DISCLOSURE OF THE INVENTION

### Problems to be Solved by the Invention

The multilayer ceramic capacitor disclosed in Patent Document 1 includes the terminal electrodes with such voids. Therefore, external stress is relaxed, and the occurrence of cracks in the capacitor is suppressed. This improves the reliability of the multilayer ceramic capacitor. However, in recent years, higher reliability is demanded, and thus further measures are needed.

It is an object for the present invention to provide highly reliable multilayer ceramic electronic components that are each able to suppress the occurrence of cracks in the multilayer body of the multilayer ceramic electronic component.

### Means for Solving the Problems

A multilayer ceramic electronic component according to an embodiment of the present invention includes: a multilayer body including a plurality of ceramic layers and a plurality of internal conductive layers that are alternately laminated, a first main surface and a second main surface that are opposed to each other in a height direction, a first lateral surface and a second lateral surface that are opposed to each other in a width direction perpendicular or substantially perpendicular to the height direction, and a first end surface and a second end surface that are opposed to each other in a length direction perpendicular or substantially perpendicular to the height direction and the width direction; and external electrodes connected to the plurality of internal conductive layers, in which the external electrodes include a first external electrode provided on the first end surface and a second external electrode provided on the second end surface, the first external electrode includes a first base electrode layer provided on the first end surface, a first organic layer provided on the first base electrode layer, and a first plated layer provided on the first organic layer, the second external electrode includes a second base electrode layer provided on the second end surface, a second organic layer provided on the second base electrode layer, and a second plated layer provided on the second organic layer, a surface of the first organic layer is provided as a surface with a portion of the first base electrode layer exposed, a surface of the second organic layer is provided as a surface with a portion of the second base electrode layer exposed, an atomic percentage of a main component metal of the first base electrode layer on the surface of the first organic layer is 4.0 atom% or less, and an atomic percentage of a main component metal of the second base electrode layer on the surface of the second organic layer is 4.0 atom% or less.

### Effects of the Invention

According to the present invention, it is possible to provide highly reliable multilayer ceramic electronic components that are each able to suppress the occurrence of cracks in the multilayer body of the multilayer ceramic electronic component.

### BRIEF DESCRIPTION OF THE DRAWINGS

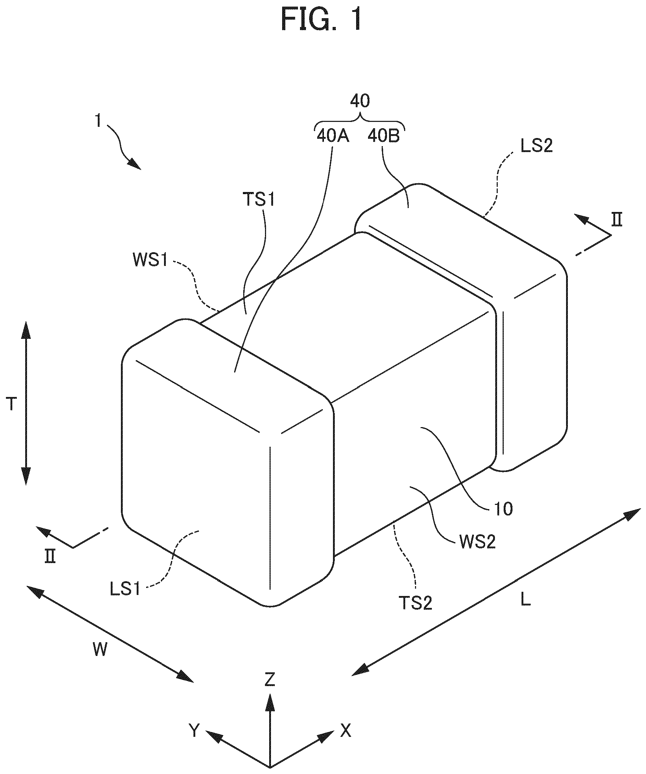

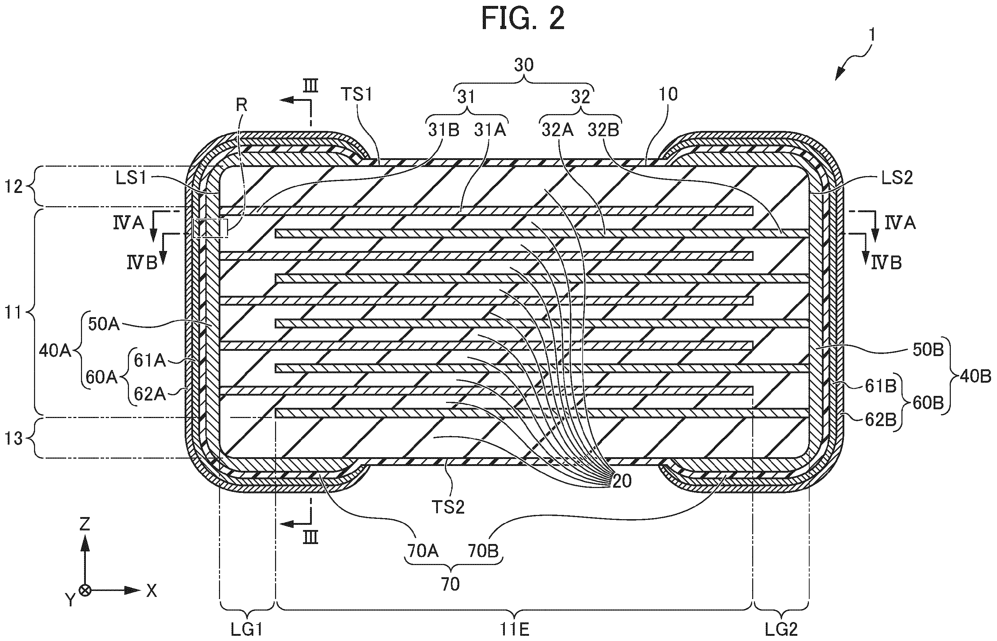

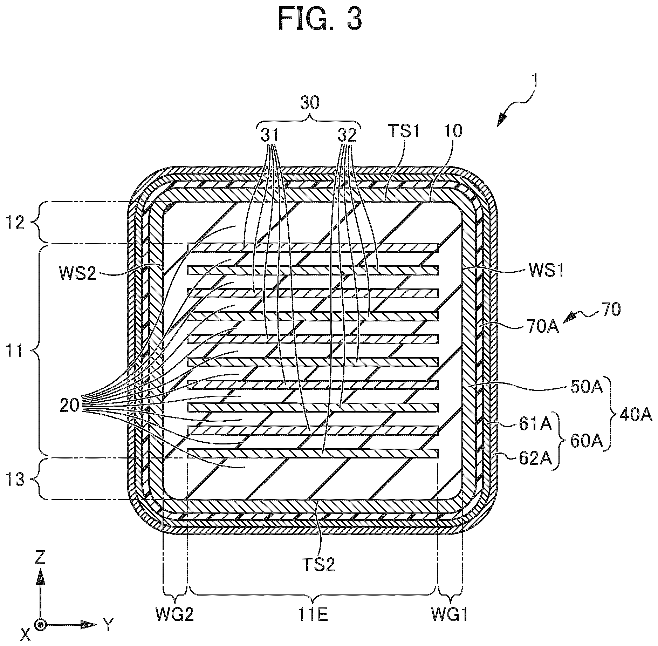

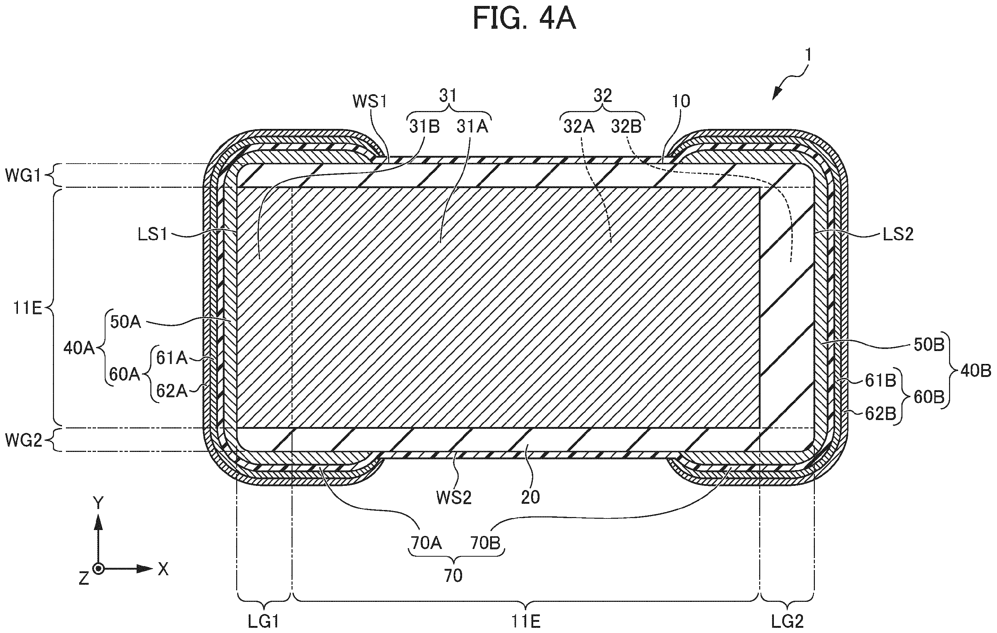

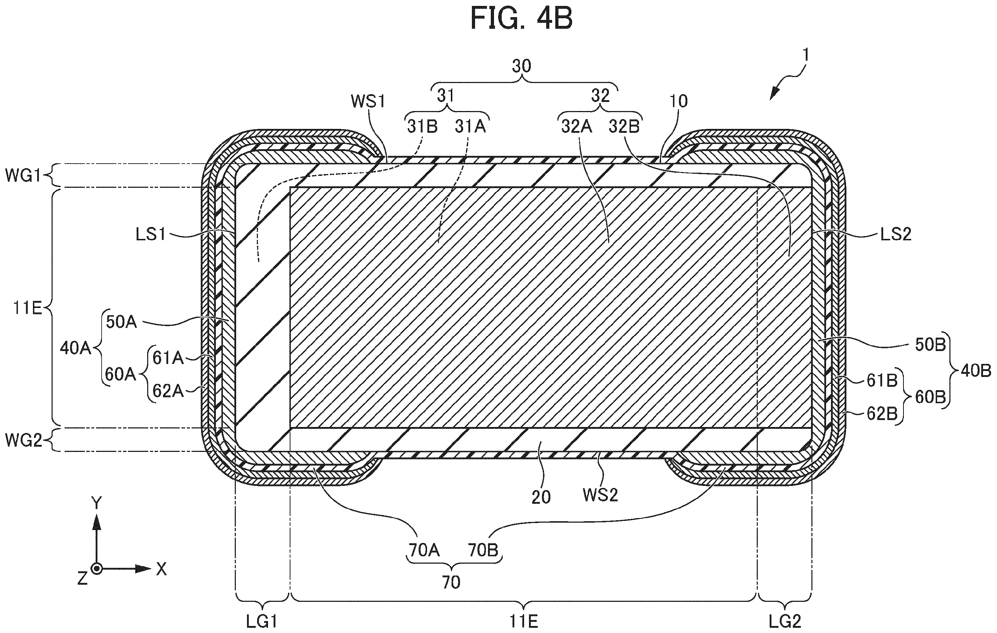

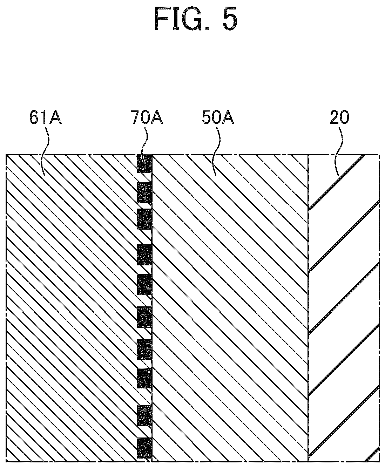

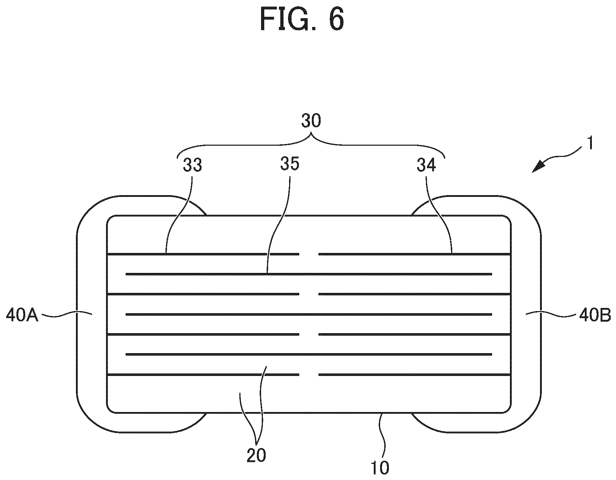

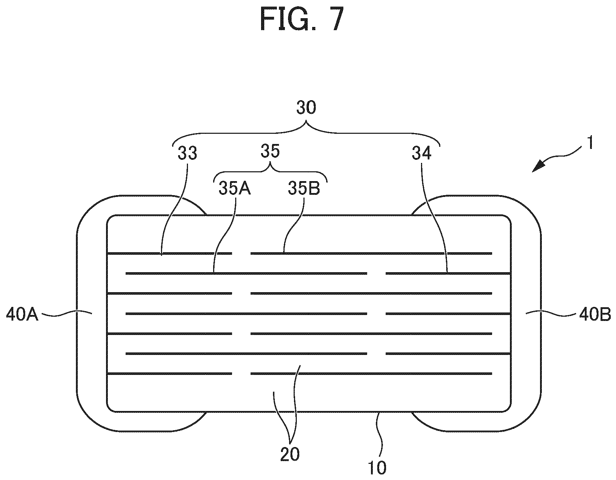

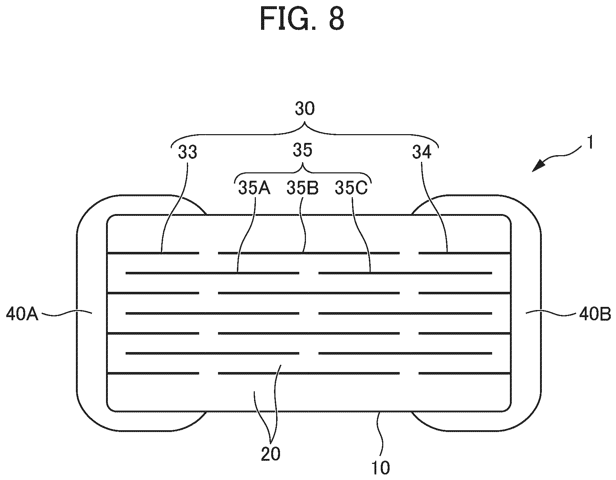

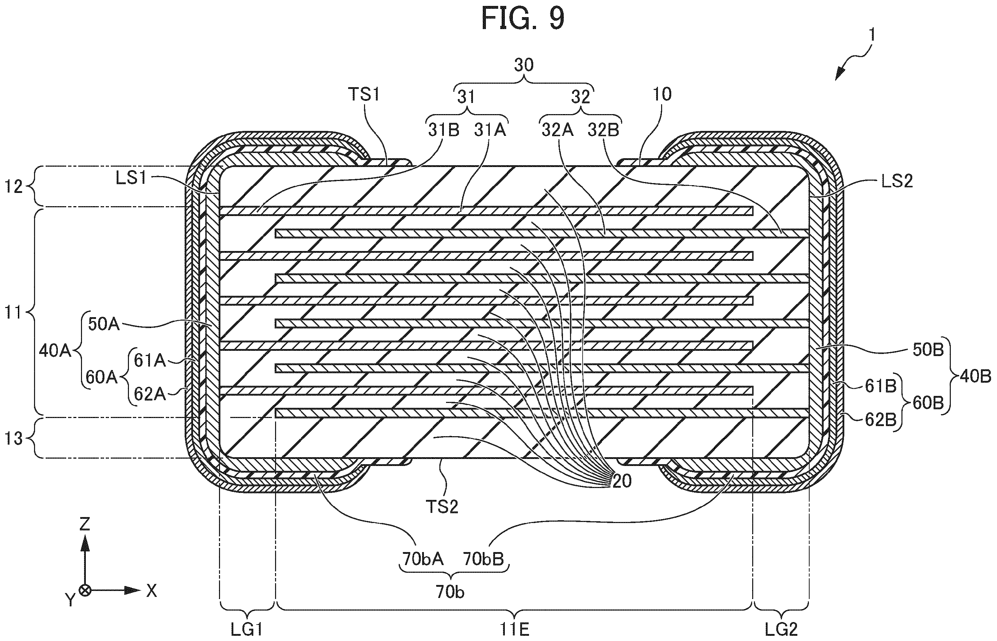

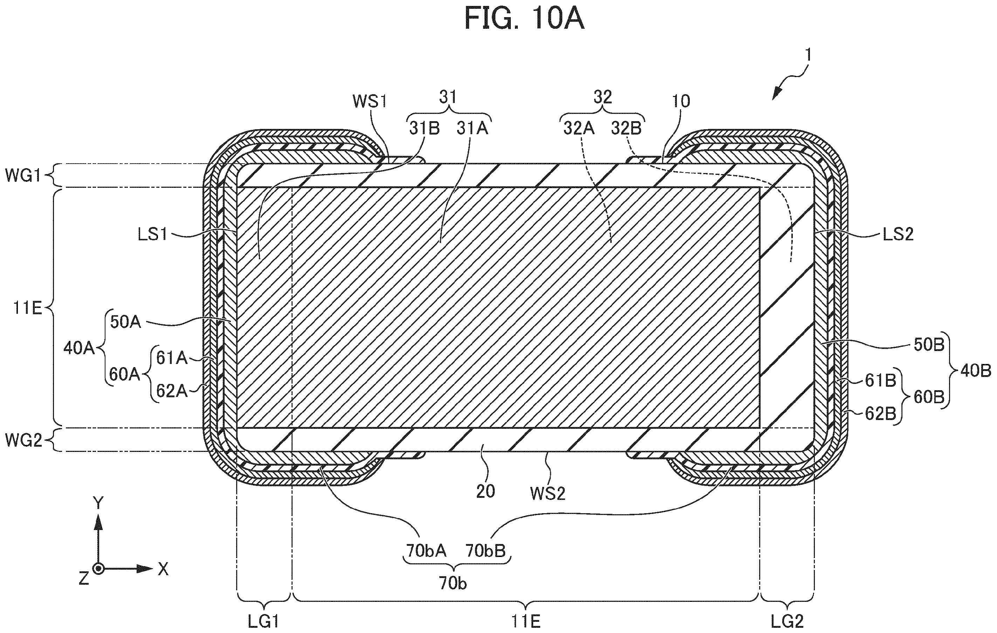

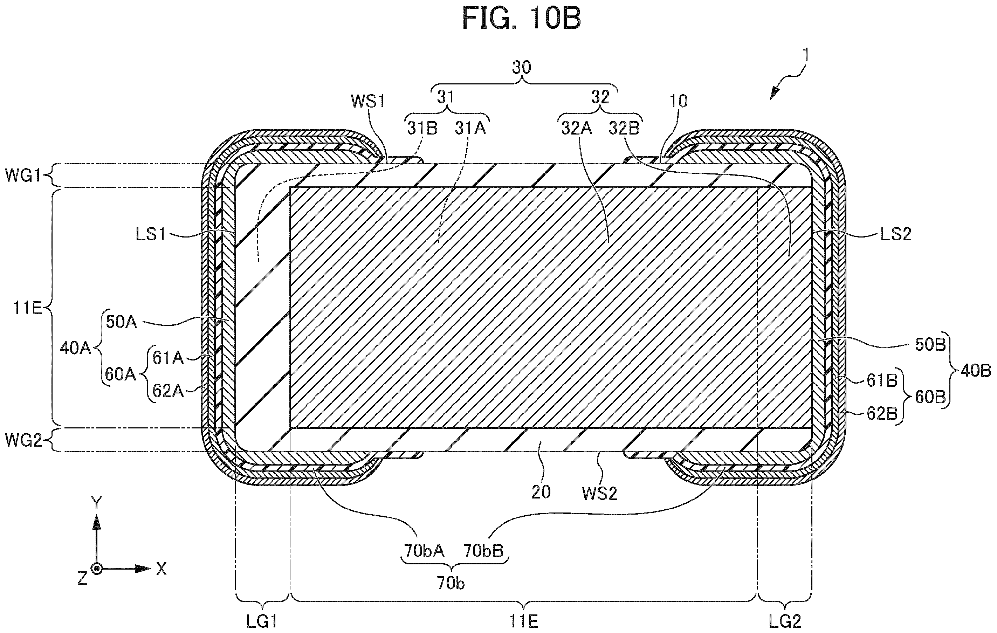

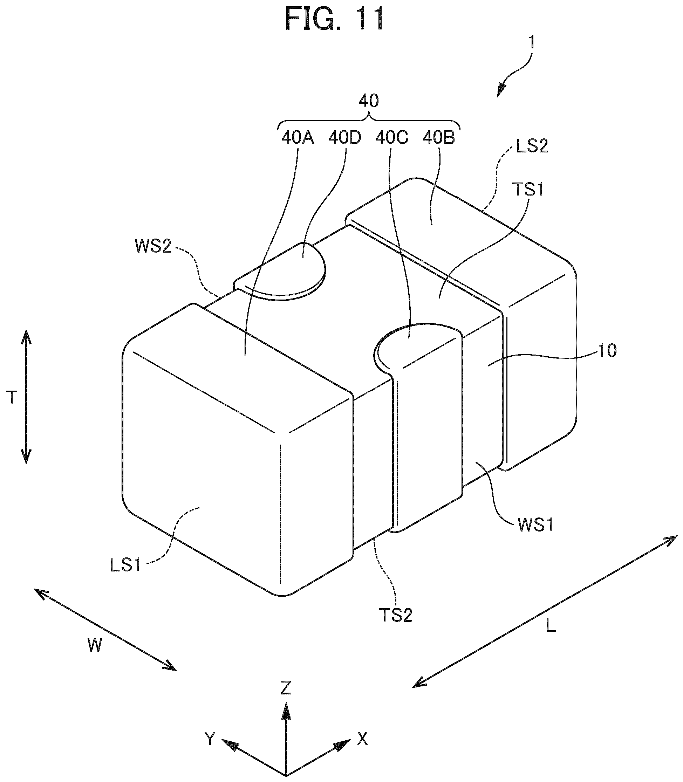

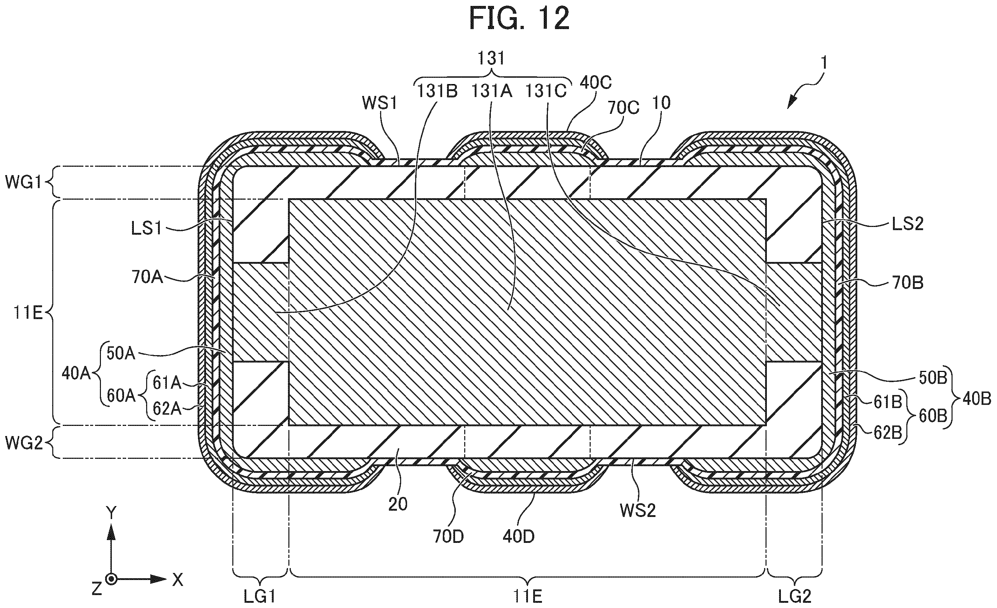

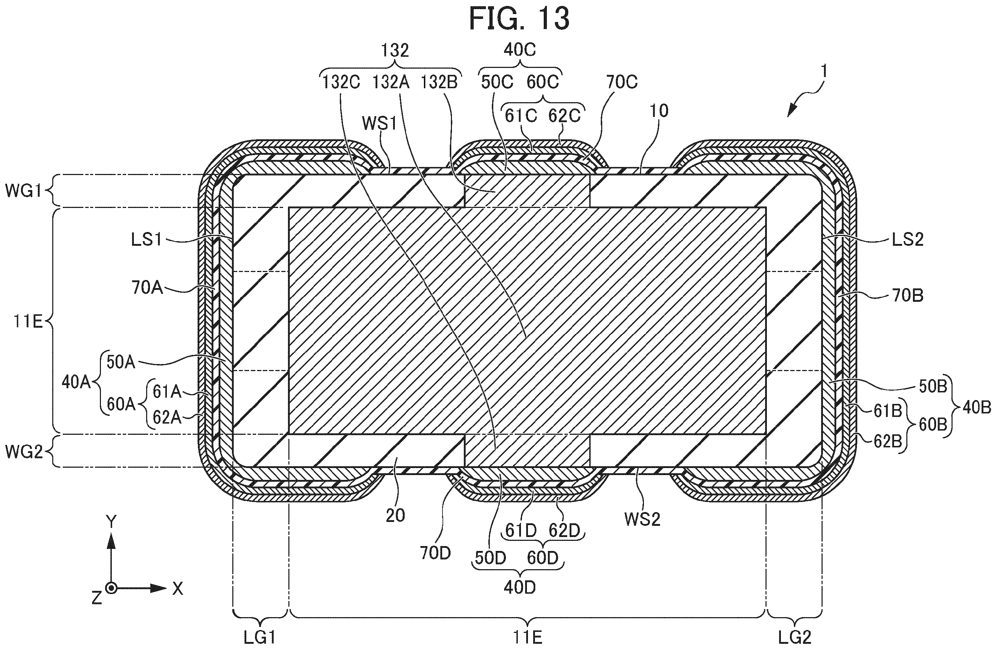

FIG. 1 is an external perspective view of a multilayer ceramic capacitor according to a first embodiment. FIG. 2 is a cross-sectional view taken along the line II-II of FIG. 1. FIG. 3 is a cross-sectional view taken along the line III-III of FIG. 2. FIG. 4A is a cross-sectional view taken along the line IVA-IVA of FIG. 2. FIG. 4B is a cross-sectional view taken along the line IVB-IVB of FIG. 2. FIG. 5 is an enlarged cross-sectional view of a portion indicated by R in FIG. 2. FIG. 6 is a diagram showing a multilayer ceramic capacitor having a two-portion configuration. FIG. 7 is a diagram showing a multilayer ceramic capacitor having a three-portion configuration. FIG. 8 is a diagram showing a multilayer ceramic capacitor having a four-portion configuration. FIG. 9 is a cross-sectional view corresponding to FIG. 2 of a modified example. FIG. 10A is a cross-sectional view corresponding to FIG. 4A of a modified example. FIG. 10B is a cross-sectional view corresponding to FIG. 4B of a modified example. FIG. 11 is an external perspective view of a multilayer ceramic capacitor according to a second embodiment. FIG. 12 is a cross-sectional view corresponding to FIG. 4A of the second embodiment. FIG. 13 is a cross-sectional view corresponding to FIG. 4B of the second embodiment.

### PREFERRED MODE FOR CARRYING OUT THE INVENTION

### <First Embodiment>

Hereinafter, a multilayer ceramic capacitor 1 functioning as a multilayer ceramic electronic component according to a first embodiment of the present disclosure will be described with reference to FIGS. 1 to 5. FIG. 1 is an external perspective view of the multilayer ceramic capacitor 1 according to the first embodiment. FIG. 2 is a cross-sectional view taken along the line II-II in FIG. 1. FIG. 3 is a cross-sectional view taken along the line III-III in FIG. 2. FIG. 4A is a cross-sectional view taken along the line IVA-IVA in FIG. 2. FIG. 4B is a cross-sectional view taken along the line IVB-IVB in FIG. 2. FIG. 5 is an enlarged cross-sectional view of the portion indicated by R in FIG. 2.

As shown in FIG. 1, the multilayer ceramic capacitor 1 according to the first embodiment has a substantially rectangular parallelepiped shape. The multilayer ceramic capacitor 1 includes a multilayer body 10 having a substantially rectangular parallelepiped shape, and a pair of external electrodes 40 provided at both end portions of the multilayer body 10 so as to be spaced apart from each other.

In FIG. 1, an arrow T indicates a lamination (stacking) direction of the multilayer ceramic capacitor 1 and the multilayer body 10. The lamination direction T is also referred to as a thickness direction and a height direction of the multilayer ceramic capacitor 1 and the multilayer body 10. In FIG. 1, the arrow L indicates a length direction orthogonal or substantially orthogonal to the lamination direction T of the multilayer ceramic capacitor 1 and the multilayer body 10. In FIG. 1, the arrow W indicates a width direction orthogonal or substantially orthogonal to the lamination direction T and the length direction L of the multilayer ceramic capacitor 1 and the multilayer body 10. The pair of external electrodes 40 is respectively provided at one end and the other end of the multilayer body 10 in the length direction L.

The XYZ Cartesian coordinate system is shown in FIGS. 1 to 4B. The length direction L of the multilayer ceramic capacitor 1 and the multilayer body 10 corresponds to the X direction. A width direction W of the multilayer ceramic capacitor 1 and the multilayer body 10 corresponds to the Y direction. The lamination direction T of the multilayer ceramic capacitor 1 and the multilayer body 10 corresponds to the Z direction. Here, the cross section shown in FIG. 2 is also referred to as an LT cross section. The cross section shown in FIG. 3 is also referred to as a WT cross section. The cross sections shown in FIGS. 4A and 4B are also referred to as LW cross sections.

As shown in FIGS. 1 to 4B, the multilayer body 10 includes a first main surface TS1 and a second main surface TS2 which are opposed to each other in the lamination direction T, a first end surface LS1 and a second end surface LS2 which are opposed to each other in the length direction L orthogonal or substantially orthogonal to the lamination direction T, and a first lateral surface WS1 and a second lateral surface WS2 which are opposed to each other in the width direction W orthogonal or substantially orthogonal to the lamination direction T and the length direction L.

As shown in FIG. 1, the multilayer body 10 has a rectangular or substantially rectangular parallelepiped shape. The dimension of the multilayer body 10 in the length direction L is not necessarily longer than the dimension of the width direction W. The corner portions and ridge portions of the multilayer body 10 are preferably rounded. The corner portions are portions where the three surfaces of the multilayer body intersect, and the ridge portions are portions where the two surfaces of the multilayer body intersect. In addition, unevenness or the like may be provided on a portion or the entirety of the surface of the multilayer body 10.

The dimension of the multilayer body 10 is not particularly limited. However, when the dimension in the length direction L of the multilayer body 10 is defined as an L dimension, the L dimension is preferably 0.2 mm or more and 10 mm or less. Furthermore, when the dimension in the lamination direction T of the multilayer body 10 is defined as a T dimension, the T dimension is preferably 0.1 mm or more and 10 mm or less. Furthermore, when the dimension in the width direction W of the multilayer body 10 is defined as a W dimension, the W dimension is preferably 0.1 mm or more and 10 mm or less.

As shown in FIGS. 2 and 3, the multilayer body 10 includes an inner layer portion 11, and a first main surface-side outer layer portion 12 and a second main surface-side outer layer portion 13 that sandwich the inner layer portion 11 in the lamination direction T.

The inner layer portion 11 includes a plurality of dielectric layers 20 functioning as a plurality of ceramic layers and a plurality of internal electrode layers 30 functioning as a plurality of internal conductive layers which are alternately laminated in the lamination direction T. The inner layer portion 11 includes, in the lamination direction T, from the internal electrode layer 30 located closest to the first main surface TS1 until the internal electrode layer 30 located closest to the second main surface TS2. In the inner layer portion 11, a plurality of internal electrode layers 30 are opposed to each other with a corresponding one of the dielectric layers 20 interposed therebetween. The inner layer portion 11 forms a capacitance and substantially functions as a capacitor.

The plurality of dielectric layers 20 are each made of a dielectric material. The dielectric material may be a dielectric ceramic including a component such as BaTiO₃, CaTiO₃, SrTiO₃, or CaZrO₃. Furthermore, the dielectric material may be obtained by adding a secondary component such as a Mn compound, an Fe compound, a Cr compound, a Co compound, or a Ni compound to the main component. The dielectric material particularly preferably includes BaTiO₃ as a main component.

The thickness of each of the dielectric layers 20 are each preferably 0.5 µm or more and 15 µm or less. The number of the dielectric layers 20 to be laminated (stacked) is preferably ten or more and 700 or less. The number of the dielectric layers 20 refers to the total number of dielectric layers 20 in the inner layer portion 11, and dielectric layers 20 in the first main surface-side outer layer portion 12 and the second main surface-side outer layer portion 13.

The plurality of internal electrode layers 30 includes a plurality of first internal electrode layers 31 functioning as a plurality of first internal conductive layers and a plurality of second internal electrode layers 32 functioning as a plurality of second internal conductive layers. The first internal electrode layers 31 and the second internal electrode layers 32 are alternately provided in the lamination direction T with a corresponding one of the dielectric layers 20 interposed therebetween. The first internal electrode layers 31 each extend toward the first end surface LS1. The second internal electrode layers 32 each extend toward the second end surface LS2. In the following description, when it is not necessary to distinguish between the first internal electrode layer 31 and the second internal electrode layer 32, the first internal electrode layer 31 and the second internal electrode layer 32 may be collectively referred to as an internal electrode layer 30.

As shown in FIG. 4A, the first internal electrode layers 31 each include a first counter portion 31A and a first extension portion 31B. The first counter portion 31A is a region opposed to the second internal electrode layer 32 with a corresponding one of the dielectric layers 20 interposed therebetween, and is located inside the multilayer body 10. The first extension portion 31B is a portion which extends from the first counter portion 31A toward the first end surface LS1, and is exposed at the first end surface LS1.

As shown in FIG. 4B, the second internal electrode layer 32 includes a second counter portion 32A and a second extension portion 32B. The second counter portion 32A is a region opposed to the first internal electrode layer 31 with a corresponding one of the dielectric layers 20 interposed therebetween, and is located inside the multilayer body 10. The second extension portion 32B is a portion extending from the second counter portion 32A toward the second end surface LS2, and is exposed at the second end surface LS2.

In the present embodiment, the first counter portions 31A and the second counter portions 32A are opposed to each other with the dielectric layers 20 interposed therebetween, such that a capacitance is formed, and the characteristics of a capacitor are developed.

The shapes of the first counter portion 31A and the second counter portion 32A are not particularly limited. However, they are preferably rectangular or substantially rectangular. However, the corner portions of the rectangular shape may be rounded, or the corner portions of the rectangular or substantially rectangular shape may be provided obliquely. The shapes of the first extension portion 31B and the second extension portion 32B are not particularly limited. However, they are preferably rectangular or substantially rectangular. However, the corner portions of the rectangular or substantially rectangular shape may be rounded, or the corner portions of the rectangular or substantially rectangular shape may be provided obliquely.

The dimension in the width direction W of the first counter portion 31A may be the same or substantially same as the dimension in the width direction W of the first extension portion 31B, or either of them may be smaller. The dimension in the width direction W of the second counter portion 32A may be the same or substantially same as the dimension in the width direction W of the second extension portion 32B, or either of them may be smaller.

The first internal electrode layers 31 and the second internal electrode layers 32 are each made of an appropriate electrically conductive material including a metal such as, for example, Ni, Cu, Ag, Pd, and Au, and an alloy including at least one of these metals. When using an alloy, the first internal electrode layers 31 and the second internal electrode layers 32 may be made of, for example, a Ag-Pd alloy or the like.

The thickness of each of the first internal electrode layers 31 and the second internal electrode layers 32 is preferably, for example, 0.2 µm or more and 2.0 µm or less. The total number of the first internal electrode layers 31 and the second internal electrode layers 32 is preferably ten or more and 700 or less.

As shown in FIGS. 2 and 3, the first main surface-side outer layer portion 12 is located adjacent to the first main surface TS1 of the multilayer body 10. The first main surface-side outer layer portion 12 is an aggregate of a plurality of dielectric layers 20 located between the first main surface TS1 and the internal electrode layer 30 closest to the first main surface TS1. On the other hand, the second main surface-side outer layer portion 13 is located adjacent to the second main surface TS2 of the multilayer body 10. The second main surface-side outer layer portion 13 is an aggregate of a plurality of dielectric layers 20 located between the second main surface TS2 and the internal electrode layer 30 closest to the second main surface TS2. The dielectric layers 20 used in the first main surface-side outer layer portion 12 and the second main surface-side outer layer portion 13 may be the same as the dielectric layers 20 used in the inner layer portion 11.

In addition, the multilayer body 10 includes a counter electrode portion 11E. The counter electrode portion 11E refers to a portion where the first counter portion 31A of the first internal electrode layer 31 and the second counter portion 32A of the second internal electrode layer 32 are opposed to each other. The counter electrode portion 11E defines and functions as a portion of the inner layer portion 11. FIG. 4A and FIG. 4B each show the range of the counter electrode portion 11E in the width direction W and in the length direction L. The counter electrode portion 11E is also referred to as a capacitor active or effective portion.

The multilayer body 10 includes lateral surface-side outer layer portions. The lateral surface-side outer layer portions include a first lateral surface-side outer layer portion WG1 and a second lateral surface-side outer layer portion WG2. The first lateral surface-side outer layer portion WG1 is a portion including the dielectric layer 20 located between the counter electrode portion 11E and the first lateral surface WS1. The second lateral surface-side outer layer portion WG2 is a portion including the dielectric layer 20 located between the counter electrode portion 11E and the second lateral surface WS2. FIGS. 3, 4A, and 4B each show the ranges of the first lateral surface-side outer layer portion WG1 and the second lateral surface-side outer layer portion WG2 in the width direction W. The lateral surface-side outer layer portions are also each referred to as a W gap or a side gap.

The multilayer body 10 includes end surface-side outer layer portions. The end surface-side outer layer portions include a first end surface-side outer layer portion LG1 and a second end surface-side outer layer portion LG2. The first end surface-side outer layer portion LG1 is a portion including the dielectric layers 20 and the first extension portions 31B located between the counter electrode portion 11E and the first end surface LS1. That is, the first end surface-side outer layer portion LG1 is an aggregate of portions of a plurality of dielectric layers 20 adjacent to the first end surface LS1 and a plurality of first extension portions 31B. The second end surface-side outer layer portion LG2 is a portion including the dielectric layers 20 and the second extension portions 32B located between the counter electrode portion 11E and the second end surface LS2. That is, the second end surface-side outer layer portion LG2 is an aggregate of portions of a plurality of dielectric layers 20 adjacent to the second end surface LS2 and a plurality of second extension portions 32B. FIGS. 2, 4A, and 4B each show the ranges in the length direction L of the first end surface-side outer layer portion LG1 and the second end surface-side outer layer portion LG2. The end surface-side outer layer portion is also each referred to as an L gap or an end gap.

As shown in FIGS. 1 and 2, the external electrodes 40 include a first external electrode 40A adjacent to the first end surface LS1 of the multilayer body 10 and a second external electrode 40B adjacent to the second end surface LS2 of the multilayer body 10.

In addition, the basic configurations of the first external electrode 40A and the second external electrode 40B are the same or substantially same each other. Furthermore, the first external electrode 40A and the second external electrode 40B have a shape that is substantially plane symmetrical with respect to the WT cross section in the middle in the length direction L of the multilayer ceramic capacitor 1. Therefore, in the following description, when it is not necessary to distinguish between the first external electrode 40A and the second external electrode 40B, the first external electrode 40A and the second external electrode 40B may be collectively referred to as an external electrode 40.

The first external electrode 40A is provided on the first end surface LS1. The first external electrode 40A is in contact with each of the first extension portions 31B of a plurality of first internal electrode layers 31 exposed at the first end surface LS1. With such a configuration, the first external electrode 40A is electrically connected to the plurality of first internal electrode layers 31. The first external electrode 40A may be provided on a portion of the first main surface TS1 and a portion of the second main surface TS2, and also on a portion of the first lateral surface WS1 and a portion of the second lateral surface WS2. In the present embodiment, the first external electrode 40A extends from the first end surface LS1 to a portion of the first main surface TS1 and to a portion of the second main surface TS2, and to a portion of the first lateral surface WS1 and to a portion of the second lateral surface WS2.

The second external electrode 40B is provided on the second end surface LS2. The second external electrode 40B is in contact with each of the second extension portions 32B of a plurality of second internal electrode layers 32 exposed at the second end surface LS2. With such a configuration, the second external electrode 40B is electrically connected to the plurality of second internal electrode layers 32. The second external electrodes 40B may be provided on a portion of the first main surface TS1 and a portion of the second main surface TS2, and also on a portion of the first lateral surface WS1 and a portion of the second lateral surface WS2. In the present embodiment, the second external electrode 40B extends from the second end surface LS2 to a portion of the first main surface TS1 and to a portion of the second main surface TS2, and to a portion of the first lateral surface WS1 and to a portion of the second lateral surface WS2.

As described above, in the multilayer body 10, the capacitance is generated by the first counter portions 31A of the first internal electrode layers 31 and the second counter portions 32A of the second internal electrode layers 32 being opposed to each other with the dielectric layers 20 interposed therebetween. Therefore, characteristics of the capacitor are provided between the first external electrode 40A to which the first internal electrode layers 31 are connected and the second external electrode 40B to which the second internal electrode layers 32 are connected.

As shown in FIGS. 2, 4A, and 4B, the first external electrode 40A includes a first base electrode layer 50A, a first organic layer 70A provided on the first base electrode layer 50A, and a first plated layer 60A provided on the first organic layer 70A. In addition, the second external electrode 40B includes a second base electrode layer 50B, a second organic layer 70B provided on the second base electrode layer 50B, and a second plated layer 60B provided on the second organic layer 70B.

The first base electrode layer 50A is provided on the first end surface LS1. The first base electrode layer 50A is connected to each of the first extension portions 31B of a plurality of first internal electrode layers 31 exposed at the first end surface LS1. In the present embodiment, the first base electrode layer 50A extends from the first end surface LS1 to a portion of the first main surface TS1 and to a portion of the second main surface TS2, and to a portion of the first lateral surface WS1 and to a portion of the second lateral surface WS2.

The second base electrode layer 50B is provided on the second end surface LS2. The second base electrode layer 50B is in contact with each of the second extension portions 32B of the plurality of second internal electrode layers 32 exposed at the second end surface LS2. In the present embodiment, the second base electrode layer 50B extends from the second end surface LS2 to a portion of the first main surface TS1 and to a portion of the second main surface TS2, and to a portion of the first lateral surface WS1 and to a portion of the second lateral surface WS2.

The first base electrode layer 50A and the second base electrode layer 50B of the present embodiment are fired layers. It is preferable that the fired layers each include both a metal component, and either a glass component or a ceramic component, or both the glass component and the ceramic component. The metal component includes, for example, at least one selected from Cu, Ni, Ag, Pd, Ag-Pd alloy, Au, and the like. The glass component includes, for example, at least one selected from B, Si, Ba, Mg, Al, Li, and the like. As the ceramic component, the same type of ceramic material as that of the dielectric layer 20 may be used, or a different type of ceramic material may be used. Ceramic components include, for example, at least one selected from BaTiO₃, CaTiO₃, (Ba, Ca)TiO₃, SrTiO₃, CaZrO₃, and the like. The main component metal of the first base electrode layer 50A and the main component metal of the second base electrode layer 50B are preferably Cu.

The fired layer is obtained, for example, by applying an electrically conductive paste containing glass and metal to the multilayer body 10 and firing the paste. The fired layer can be formed by cofiring a multilayer chip before firing, which is a material of the multilayer body 10 having a plurality of internal electrodes and dielectric layers, and an electrically conductive paste applied to the multilayer chip. Alternatively, the fired layer may be formed by firing the multilayer chip to obtain the multilayer body 10, and thereafter applying the electrically conductive paste to the multilayer body 10 for firing. In the above formation method, it is preferable that the fired layer is formed by firing a material to which a ceramic material is added instead of the glass component. In this case, it is particularly preferable to use, as the ceramic material to be added, the same type of ceramic material as the dielectric layer 20. Furthermore, the fired layer may include a plurality of layers.

The thickness of the first base electrode layer 50A located on the first end surface LS1 in the length direction L is preferably, for example, about 2 µm or more and about 220 µm or less in the middle of the first base electrode layer 50A in the lamination direction T and the width direction W.

The thickness of the second base electrode layer 50B located on the second end surface LS2 in the length direction L is preferably, for example, about 2 µm or more and about 220 µm or less in the middle of the second base electrode layer 50B in the lamination direction T and the width direction W.

When providing the first base electrode layer 50A to portions of at least one of the first main surface TS1 and the second main surface TS2, the thickness in the lamination direction T of the first base electrode layer 50A provided at this portion is preferably about 4 µm or more and about 15 µm or less in the middle in the length direction L and the width direction W of the first base electrode layer 50A provided at this portion, for example.

When providing the first base electrode layer 50A to portions of at least one of the first lateral surface WS1 and the second lateral surface WS2, the thickness in the width direction W of the first base electrode layer 50A provided at this portion is preferably about 4 µm or more and about 15 µm or less in the middle in the length direction L and the lamination direction T of the first base electrode layer 50A provided at this portion, for example.

When providing the second base electrode layer 50B to portions of at least one of the first main surface TS1 and the second main surface TS2, the thickness in the lamination direction T of the second base electrode layer 50B provided at this portion is preferably about 4 µm or more and about 15 µm or less in the middle in the length direction L and the width direction W of the second base electrode layer 50B provided at this portion, for example.

When providing the second base electrode layer 50B to portions of at least one of the first lateral surface WS1 and the second lateral surface WS2, the thickness in the width direction W of the second base electrode layer 50B provided at this portion is preferably about 4 µm or more and about 15 µm or less in the middle in the length direction L and the lamination direction T of the second base electrode layer 50B provided at this portion, for example.

The first organic layer 70A covers the first base electrode layer 50A. Details of the first organic layer 70A will be described later.

The second organic layer 70B covers the second base electrode layer 50B. Details of the second organic layer 70B will be described later.

The first plated layer 60A covers the first organic layer 70A.

The second plated layer 60B covers the second organic layer 70B.

The first plated layer 60A and the second plated layer 60B may each include at least one selected from Cu, Ni, Sn, Ag, Pd, a Ag-Pd alloy, Au, and the like. The first plated layer 60A and the second plated layer 60B may each include a plurality of layers. The first plated layer 60A and the second plated layer 60B each preferably include a two-layer configuration including a Sn plated layer on a Ni plated layer.

The first plated layer 60A covers the first organic layer 70A. In the present embodiment, the first plated layer 60A includes a first Ni plated layer 61A, and a first Sn plated layer 62A provided on the first Ni plated layer 61A.

The second plated layer 60B covers the second organic layer 70B. In the present embodiment, the second plated layer 60B includes a second Ni plated layer 61B, and a second Sn plated layer 62B provided on the second Ni plated layer 61B.

The Ni plated layer prevents the first base electrode layer 50A and the second base electrode layer 50B from being eroded by solder when mounting the multilayer ceramic capacitor 1. Furthermore, the Sn plated layer improves the wettability of the solder when mounting the multilayer ceramic capacitor 1. This facilitates the mounting of the multilayer ceramic capacitor 1. The thickness of each of the first Ni plated layer 61A, the first Sn plated layer 62A, the second Ni plated layer 61B, and the second Sn plated layer 62B is preferably 2 µm or more and 15 µm or less.

The external electrode 40 of the present embodiment may include an electrically conductive resin layer including electrically conductive particles and a thermosetting resin, for example. The electrically conductive resin layer may cover the fired layer. When the electrically conductive resin layer covers the fired layer, the electrically conductive resin layer is provided between the fired layer and the organic layer 70 (the first organic layer 70A and the second organic layer 70B). The electrically conductive resin layer may completely cover the fired layer or may partially cover the fired layer.

The electrically conductive resin layer including a thermosetting resin is more flexible than an electrically conductive layer made of, for example, a plating film or a fired product of an electrically conductive paste. Therefore, even when an impact caused by physical shock or thermal cycling is applied to the multilayer ceramic capacitor 1, the electrically conductive resin layer functions as a buffer layer. Therefore, the electrically conductive resin layer reduces or prevents the occurrence of cracks in the multilayer ceramic capacitor 1.

Metals of the electrically conductive particles may be, for example, Ag, Cu, Ni, Sn, Bi or alloys including them. The electrically conductive particle preferably includes Ag, for example. The electrically conductive particle is a metal powder of Ag, for example. Ag is suitable as an electrode material because of its lowest resistivity among metals. In addition, since Ag is a noble metal, it is not likely to be oxidized, and weatherability thereof is high. Therefore, the metal powder of Ag is suitable as the electrically conductive particle.

Furthermore, the electrically conductive particle may be a metal powder coated on the surface with Ag. When using those coated with Ag on the surface of the metal powder, the metal powder is preferably Cu, Ni, Sn, Bi, or an alloy powder thereof. In order to make the metal of the base material inexpensive while keeping the characteristics of Ag, it is preferable to use a metal powder coated with Ag.

Furthermore, the electrically conductive particles may be formed by subjecting Cu and Ni to an oxidation prevention treatment. Furthermore, the electrically conductive particle may be a metal powder coated with Sn, Ni, and Cu on the surface of the metal powder. When using those coated with Sn, Ni, and Cu on the surface of the metal powder, the metal powder is preferably Ag, Cu, Ni, Sn, Bi, or an alloy powder thereof.

The shape of the electrically conductive particle is not particularly limited. For the electrically conductive particle, a spherical metal powder, a flat metal powder, or the like can be used. However, it is preferable to use a mixture of a spherical metal powder and a flat metal powder.

The electrically conductive particles included in the electrically conductive resin layer mainly maintain the electrical conductivity of the electrically conductive resin layer. Specifically, by a plurality of electrically conductive particles being in contact with each other, an energization path is provided inside the electrically conductive resin layer.

The resin of the electrically conductive resin layer may include, for example, at least one selected from a variety of known thermosetting resins such as epoxy resin, phenolic resin, urethane resin, silicone resin, polyimide resin, and the like. Among those, epoxy resin is excellent in heat resistance, moisture resistance, adhesion, etc., and thus is one of the most preferable resins. Furthermore, it is preferable that the resin of the electrically conductive resin layer includes a curing agent together with a thermosetting resin. When epoxy resin is used as a base resin, the curing agent for the epoxy resin may be various known compounds such as phenols, amines, acid anhydrides, imidazoles, active esters, and amideimides.

The electrically conductive resin layer may include a plurality of layers. The thickest portion of the electrically conductive resin layer is preferably 10 µm or more and 200 µm or less.

Next, the organic layer 70 according to one embodiment will be described with reference to FIG. 2 to 5. The organic layer 70 according to the embodiment includes a first organic layer 70A and a second organic layer 70B.

The first organic layer 70A is provided on the first base electrode layer 50A. The first plated layer 60A is provided on the first organic layer 70A. In addition, the first organic layer 70A may also be provided on a portion of the first main surface TS1 and a portion of the second main surface TS2, and a portion of the first lateral surface WS1 and a portion of the second lateral surface WS2. In the present embodiment, the first organic layer 70A extends toward substantially the middle in the length direction L of the first main surface TS1 and the second main surface TS2, and substantially the middle in the length direction L of the first lateral surface WS1 and the second lateral surface WS2.

The second organic layer 70B is provided on the second base electrode layer 50B. The second plated layer 60B is provided on the second organic layer 70B. In addition, the second organic layer 70B may also be provided on a portion of the first main surface TS1 and a portion of the second main surface TS2, and a portion of the first lateral surface WS1 and a portion of the second lateral surface WS2. In the present embodiment, the second organic layer 70B extends toward substantially the middle in the length direction L of the first main surface TS1 and the second main surface TS2, and substantially the middle in the length direction L of the first lateral surface WS1 and the second lateral surface WS2.

Therefore, the first organic layer 70A and the second organic layer 70B are integrally formed at substantially the middle in the length direction L of the first main surface TS1 and the second main surface TS2, and substantially the middle in the length direction L of the first lateral surface WS1 and the second lateral surface WS2. In this manner, the first organic layer 70A and the second organic layer 70B according to the present embodiment are integrally formed so as to cover the entire portion of the surface of the multilayer body 10 that is exposed from the external electrode 40.

The state of the base electrode layer 50 covered with the organic layer 70 will be described with reference to FIG. 5. FIG. 5 is an enlarged cross-sectional view of the portion shown by R in FIG. 2. In FIG. 5, the state of the first base electrode layer 50A covered with the first organic layer 70A will be described, but the description of the state of the second base electrode layer 50B covered with the second organic layer 70B will be omitted since it is similar. The first organic layer 70A is formed between the first base electrode layer 50A provided on the dielectric layer 20 and the first Ni plated layer 61A, as shown in FIG. 5.

The surface of the first organic layer 70A is provided as a surface where a portion of the first base electrode layer 50A is exposed. That is, the first organic layer 70A includes a plurality of voids as shown in FIG. 5. The atomic percentage of the main component metal of the first base electrode layer 50A on the surface of the first organic layer 70A is 4.0 atom% or less. Preferably, the atomic percentage of the main component metal of the first base electrode layer 50A on the surface of the first organic layer 70A is 3.0 atom% or less.

The surface of the second organic layer 70B is provided as a surface where a portion of the second base electrode layer 50B is exposed. That is, the second organic layer 70B includes a plurality of voids as shown in FIG. 5. The atomic percentage of the main component metal of the second base electrode layer 50B on the surface of the second organic layer 70B is 4.0 atom% or less. Preferably, the atomic percentage of the main component metal of the second base electrode layer 50B on the surface of the second organic layer 70B is 3.0 atom% or less.

Preferably, the atomic percentage of the main component metal of the first base electrode layer 50A on the surface of the first organic layer 70A is 0.6 atom% or more. Preferably, the atomic percentage of the main component metal of the second base electrode layer 50B on the surface of the second organic layer 70B is 0.6 atom% or more.

The main component metal of the first base electrode layer 50A and the main component metal of the second base electrode layer 50B are preferably Cu as described above. However, the main component metal of the first base electrode layer 50A and the main component metal of the second base electrode layer 50B are not limited to Cu. For example, Ni, Ag, Pd, Ag-Pd alloy, or Au may be used.

The first organic layer 70A and the second organic layer 70B include an organosilicon compound. This allows the first organic layer 70A and the second organic layer 70B to be reliably formed on the surfaces of the multilayer body 10, the base electrode layer 50, etc., thereby improving reliability.

However, the composition of the first organic layer 70A and the second organic layer 70B is not limited to this. For example, the first organic layer 70A and the second organic layer 70B may be a fatty acid coat. The fatty acid coat is a layer formed by scattering a fatty acid on the surface of the base electrode layer. When applying a fatty acid coat functioning as the first organic layer 70A and the second organic layer 70B, the fatty acid will be present at least on the surface of the base electrode layer. More specifically, the fatty acid is present at least on the surface of the first base electrode layer 50A and on the surface of the second base electrode layer 50B. This allows the carboxyl group of the fatty acid to ionize and adhere to the base electrode layer by ionic bonding force, and at the adhesion portion, the deposition of plating of the plated layer provided on the base electrode layer is inhibited, thereby reducing the bonding area between the base electrode layer and the plated layer. Therefore, the adhesion strength between the base electrode layer and the plated layer decreases, which has the effect of promoting peeling between the base electrode layer and the plated layer formed thereon. Consequently, when a shock from dropping or shock from thermal cycling is applied to the multilayer ceramic capacitor, it is possible to stably peel between the base electrode layer and the plated layer to release stress. As a result, it is possible to suppress cracking in the multilayer body of the multilayer ceramic capacitor.

Preferably, the sum of the atomic percentages (atom%) of Si, C, N, and O on the surface of the first organic layer 70A is 90 atom% or more. Preferably, the sum of the atomic percentages (atom%) of Si, C, N, and O on the surface of the second organic layer 70B is 90 atom% or more.

The thickness of the first organic layer 70A is preferably 5 nm or more and 500 nm or less. More preferably, the thickness of the first organic layer 70A is 100 nm or more and 200 nm or less. The thickness of the second organic layer 70B is preferably 5 nm or more and 500 nm or less. More preferably, the thickness of the second organic layer 70B is 100 nm or more and 200 nm or less.

The above is the basic configuration of the multilayer ceramic capacitor 1 according to the embodiment. When the dimension in the length direction of the multilayer ceramic capacitor 1 including the multilayer body 10 and the external electrodes 40 is defined as the L dimension, the L dimension is preferably 0.2 mm or more and 10 mm or less. Furthermore, when the dimension in the lamination direction of the multilayer ceramic capacitor 1 is defined as the T dimension, the T dimension is preferably 0.1 mm or more and 10 mm or less. Furthermore, when the dimension in the width direction of the multilayer ceramic capacitor 1 is defined as the W dimension, the W dimension is preferably 0.1 mm or more and 10 mm or less.

### <Atomic Percentage of Organic Layer Surface Component>

Next, a method of measuring the atomic percentage of organic layer surface components in one embodiment will be described. First, only one of the external electrodes of the multilayer ceramic capacitor is mounted on a mounting substrate using solder, and the other external electrode is placed in a floating state. Next, the other external electrode in the floating state is pressed from the bottom in the height direction to cause peeling between the base electrode layer and the plated layer at the one external electrode mounted on the mounting substrate, thereby exposing the organic layer. Then, XPS analysis is performed on the multilayer ceramic capacitor 1 from which the plated layer has been peeled off. First, X-rays are irradiated on the entire surface of the exposed organic layer. The acceleration voltage of the thermal electrons at this time is 15 kV. Next, after qualitative analysis of all elements is performed by wide scan, quantitative analysis of all elements is performed by narrow scan, and the existence ratio (atom%) of all elements on the surface of the organic layer can be calculated. In this embodiment, narrow scan spectra are calculated from elements detected from wide scan spectra, normalized so that the total of detected elements becomes 100 atom%, and XPS analysis is performed. The existence ratio (atom%) is an atomic percentage indicating the proportion of atoms excluding hydrogen and helium.

Next, a method of manufacturing the multilayer ceramic capacitor 1 of the present embodiment of the present invention will be described. The method of manufacturing the multilayer ceramic capacitor 1 of the present embodiment is not limited as long as the above-described requirements are satisfied. However, a preferable manufacturing method includes the following steps. Details of each step are described below.

A dielectric sheet for manufacturing the dielectric layer 20 and an electrically conductive paste for manufacturing the internal electrode layer 30 are prepared. Both the dielectric sheet for the dielectric layer 20 and the electrically conductive paste for the internal electrode layer 30 include a binder and a solvent. The binders and solvents may be known. The paste made of an electrically conductive material is, for example, a paste obtained by adding an organic binder and an organic solvent to metal powder.

An electrically conductive paste for manufacturing the internal electrode layer 30 is printed on the dielectric sheet by using a printing plate designed to have the shape of the internal electrode layer 30 of the present embodiment, for example, by screen printing or gravure printing. With such a configuration, a dielectric sheet having a pattern of the first internal electrode layer 31 provided thereon and a dielectric sheet having a pattern of the second internal electrode layer 32 provided thereon are prepared.

By laminating a predetermined number of dielectric sheets on which patterns of the internal electrode layers 30 are not printed, a portion functioning as the first main surface-side outer layer portion 12 adjacent to the first main surface TS1 is formed. On top of that, the dielectric sheets on which the pattern of the first internal electrode layer 31 is printed and the dielectric sheets on which the pattern of the second internal electrode layer 32 is printed are sequentially and alternately laminated to form a portion functioning as the inner layer portion 11. A predetermined number of dielectric sheets on which patterns of the internal electrode layers 30 are not printed are laminated on the portion functioning as the inner layer portion 11 to form a portion functioning as the second main surface-side outer layer portion 13 adjacent to the second main surface TS2. Thus, a multilayer sheet is obtained.

Next, the multilayer sheet is pressed in the laminating direction by a means such as hydrostatic pressing to prepare a multilayer block.

Next, the multilayer block is cut to a predetermined size and divided into individual pieces to obtain a plurality of multilayer chips. Thereafter, the multilayer chips may be polished by barrel polishing or the like to round the corner portions and the ridge portions.

Next, the multilayer chips are fired to obtain the multilayer body 10. The firing temperature at this time depends on the materials of the dielectric layer 20 and the internal electrode layer 30, but is preferably 900°C or higher and 1400°C or lower, for example.

The electrically conductive paste defining and functioning as the base electrode layer 50 is applied to both end surfaces of the multilayer body 10. In the present embodiment, the base electrode layer 50 is a fired layer. The fired layer can be formed by applying an electrically conductive paste containing a glass component and a metal to the multilayer body 10 by a method such as dipping, and then performing firing treatment. The temperature of the firing treatment at this time is preferably 700°C or higher and 900°C or lower.

Furthermore, the multilayer chips before firing and the electrically conductive paste applied to the multilayer chip may be fired simultaneously. In such a case, the fired layer is preferably formed by firing a ceramic material added instead of the glass component. At this time, it is particularly preferable to use, as the ceramic material to be added, the same kind of ceramic material as the dielectric layer 20. In this case, an electrically conductive paste is applied to the multilayer chip before firing, and the multilayer chip and the electrically conductive paste applied to the multilayer chip are fired at the same time to form the multilayer body 10 in which the fired layer is formed.

Next, an organic layer is formed by sparsely coating an organic compound on the base electrode layer. As a method for forming an organic layer by sparsely coating an organic compound on the base electrode layer, the organic compound can be formed by diluting it with an organic solvent and applying it by spray coating. Specifically, for example, a solution is prepared by diluting a silane coupling agent with IPA (2-propanol). A multilayer body with the base electrode layer formed is placed into a barrel device, and the solution is spray-coated onto the multilayer body with the base electrode layer formed. Thereafter, the resultant product is taken out from the barrel device and spread on a filter paper, and the organic layer is cured by heat treatment at 100°C to 200°C for a predetermined time (30 minutes to 60 minutes).

In addition, after preparing a solution by diluting an organic compound with an organic solvent, it is also possible to form the organic layer by applying the solution to the multilayer body with the base electrode layer formed and thermally curing it. Here, the method of applying the solution can be performed by dipping or other methods.

Here, the target value of the atomic percentage of the main component metal of the base electrode layer on the surface of the organic layer and the thickness of the organic layer can be controlled by controlling the solution concentration, application method, application time, and temperature during application.

Thereafter, a plated layer is formed on the surface of the organic layer 70. In the present embodiment, the first plated layer 60A is formed on the surface of the first organic layer 70A. Also, the second plated layer 60B is formed on the surface of the second organic layer 70B. In the present embodiment, a Ni plated layer and a Sn plated layer are formed as the plated layer. When performing the plating process, either electrolytic plating or electroless plating may be adopted. However, electroless plating has a disadvantage in that a pretreatment with a catalyst or the like is necessary in order to improve the plating deposition rate, and thus the process is complicated. Therefore, normally, electrolytic plating is preferably adopted. The Ni plated layer and the Sn plated layer are sequentially formed, for example, by barrel plating.

When the electrically conductive resin layer is provided, the electrically conductive resin layer may cover the fired layer. When the electrically conductive resin layer is provided, an electrically conductive resin paste containing a thermosetting resin and a metal component is applied on the fired layer, and then heat treatment is performed at a temperature of 250°C to 550°C or higher. Thus, the thermosetting resin is thermally cured to form the electrically conductive resin layer. The atmosphere during the heat treatment is preferably an N₂ atmosphere. Furthermore, in order to prevent scattering of the resin and to prevent oxidation of various metal components, the oxygen concentration is preferably 100 ppm or less.

The multilayer ceramic capacitor 1 is manufactured by the manufacturing process described above.

The configuration of the multilayer ceramic capacitor 1 is not limited to the configuration shown in FIGS. 1 to 4B. For example, the multilayer ceramic capacitor 1 may include a two-portion configuration, a three-portion configuration, or a four-portion configuration as shown in FIGS. 6 to 8.

The multilayer ceramic capacitor 1 shown in FIG. 6 is a multilayer ceramic capacitor 1 including a two-portion configuration, and includes, as internal electrode layers 30, floating internal electrode layers 35 which are not exposed at either the first end surface LS1 or the second end surface LS2, in addition to the first internal electrode layers 33 and the second internal electrode layers 34. The multilayer ceramic capacitor 1 shown in FIG. 7 is a multilayer ceramic capacitor 1 including a three-portion configuration including first floating internal electrode layers 35A and second floating internal electrode layers 35B as floating internal electrode layers 35. The multilayer ceramic capacitor 1 shown in FIG. 8 is a multilayer ceramic capacitor 1 including a four-portion configuration including first floating internal electrode layers 35A, second floating internal electrode layers 35B, and third floating internal electrode layers 35C as floating internal electrode layers 35. As described above, by providing the floating internal electrode layers 35 functioning as the internal electrode layers 30, the multilayer ceramic capacitor 1 has a configuration in which the counter electrode portions are divided into a plurality of portions. With such a configuration, a plurality of capacitor components are provided between the opposing internal electrode layers 30, and these capacitor components are connected in series. Therefore, the voltages applied to the respective capacitor components are reduced, and thus it is possible to improve the pressure resistance of the multilayer ceramic capacitor 1. In addition, the multilayer ceramic capacitor 1 of the present embodiment may include a multiple-portion configuration of four or more.

### <Modified Example>

In the multilayer ceramic capacitor 1 according to the above-described embodiment, the first organic layer 70A and the second organic layer 70B extend toward substantially the middle in the length direction L of the first main surface TS1 and the second main surface TS2, and toward substantially the middle in the length direction L of the first lateral surface WS1 and the second lateral surface WS2, and are integrally formed to cover the entire portion of the surface of the multilayer body 10 that is exposed from the external electrodes 40. However, the configuration of the first organic layer 70A and the second organic layer 70B is not limited thereto.

The following describes a multilayer ceramic capacitor 1 according to a modified example with reference to FIGS. 9 to 10B. FIG. 9 is a cross-sectional view corresponding to FIG. 2 of the modified example. FIG. 10A is a cross-sectional view corresponding to FIG. 4A of the modified example. FIG. 10B is a cross-sectional view corresponding to FIG. 4B of the modified example. The same names may be given to configurations that are the same as those in the first embodiment, and detailed explanations may be omitted.

As shown in FIG. 1, the multilayer ceramic capacitor 1 according to the modified example has a substantially rectangular parallelepiped shape. The multilayer ceramic capacitor 1 includes a multilayer body 10 having a substantially rectangular parallelepiped shape, and a pair of external electrodes 40 provided at both end portions of the multilayer body 10 so as to be spaced apart from each other.

As shown in FIGS. 1 and 9, the external electrodes 40 include a first external electrode 40A adjacent to the first end surface LS1 of the multilayer body 10 and a second external electrode 40B adjacent to the second end surface LS2 of the multilayer body 10.

As shown in FIGS. 9, 10A, and 10B, the first external electrode 40A includes a first base electrode layer 50A, a first organic layer 70bA provided on the first base electrode layer 50A, and a first plated layer 60A provided on the first organic layer 70bA. Furthermore, the second external electrode 40B includes a second base electrode layer 50B, a second organic layer 70bB provided on the second base electrode layer 50B, and a second plated layer 60B provided on the second organic layer 70bB.

The organic layer 70b according to the present modified example includes the first organic layer 70bA and the second organic layer 70bB.

The first organic layer 70bA is provided on the first base electrode layer 50A. The first plated layer 60A is provided on the first organic layer 70bA. In addition, the first organic layer 70bA may also be provided on a portion of the first main surface TS1 and a portion of the second main surface TS2, and a portion of the first lateral surface WS1 and a portion of the second lateral surface WS2. In the present modified example, the first organic layer 70bA extends to a portion of the first main surface TS1 and a portion of the second main surface TS2, and a portion of the first lateral surface WS1 and a portion of the second lateral surface WS2.

The second organic layer 70bB is provided on the second base electrode layer 50B. The second plated layer 60B is provided on the second organic layer 70bB. In addition, the second organic layer 70bB may also be provided on a portion of the first main surface TS1 and a portion of the second main surface TS2, and a portion of the first lateral surface WS1 and a portion of the second lateral surface WS2. In the present modified example, the second organic layer 70bB extends to a portion of the first main surface TS1 and a portion of the second main surface TS2, and a portion of the first lateral surface WS1 and a portion of the second lateral surface WS2.

That is, in the multilayer ceramic capacitor 1 according to the present modified example, there is a portion where no organic layer 70b exists between the first external electrode 40A and the second external electrode 40B. Therefore, in the present modified example, the first organic layer 70bA and the second organic layer 70bB are not integrally formed, and a portion of the surface of the multilayer body 10 is exposed. Even in this case, since the organic layer is formed at the end portion of the base electrode layer of the external electrode, which is the starting point of cracks, it is possible to achieve the advantageous effect of crack suppression.

### <Second Embodiment>

The multilayer ceramic capacitor 1 according to the first embodiment is two-terminal type including two external electrodes, but is not limited thereto, and may be multi-terminal type including a plurality of external electrodes.

Hereinafter, a multilayer ceramic capacitor 1 according to the second embodiment will be described with reference to FIGS. 11 to 13. In the following description, detailed explanations of the same configurations as those of the first embodiment will be omitted. FIG. 11 is a perspective view showing the appearance of a multilayer ceramic capacitor according to the second embodiment. FIG. 12 is a cross-sectional view corresponding to FIG. 4A in the second embodiment. FIG. 13 is a cross-sectional view corresponding to FIG. 4B in the second embodiment.

The multilayer ceramic capacitor 1 of the present embodiment differs from the first embodiment in the internal electrode layers inside the multilayer body 10 and the configuration of the external electrodes 40.

The plurality of internal electrode layers functioning as a plurality of internal conductor layers include a plurality of first internal electrode layers 131 functioning as a plurality of first internal conductor layers extending toward the first end surface LS1 and the second end surface LS2, and a plurality of second internal electrode layers 132 functioning as a plurality of second internal conductor layers extending toward at least one of the first lateral surface WS1 or the second lateral surface WS2.

In one embodiment, the plurality of internal electrode layers include a plurality of first internal electrode layers 131 extending toward the first end surface LS1 and the second end surface LS2, and a plurality of second internal electrode layers 132 extending toward the first lateral surface WS1 and the second lateral surface WS2. Each of the plurality of first internal electrode layers 131 are provided on a corresponding one of the plurality of dielectric layers 20. Each of the plurality of second internal electrode layers 132 are provided on a corresponding one of the plurality of dielectric layers 20. The plurality of first internal electrode layers 131 and the plurality of second internal electrode layers 132 are alternately provided in the lamination direction T of the multilayer body 10 with a corresponding one of the dielectric layers 20 interposed therebetween. The first internal electrode layers 131 and the second internal electrode layers 132 are provided so as to sandwich the dielectric layers 20.

One of the first internal electrode layers 131 is provided on a corresponding one of the dielectric layers 20, and extends from the first end surface LS1 toward the second end surface LS2 so as to be exposed at the first end surface LS1 and the second end surface LS2. More specifically, the first internal electrode layer 131 includes a first counter portion 131A which is opposed to the second internal electrode layer 132, a first extension portion 131B extending from the first counter portion 131A toward the first end surface LS1, and a second extension portion 131C extending from the first counter portion 131A toward the second end surface LS2. The first counter portion 131A is located at the middle portion on the dielectric layer 20. The first extension portion 131B is exposed at the first end surface LS1. The second extension portion 131C is exposed at the second end surface LS2. The first internal electrode layer 131 is not exposed at the first lateral surface WS1 or the second lateral surface WS2. The shapes of the first counter portion 131A, the first extension portion 131B, and the second extension portion 131C of the first internal electrode layer 131 are not particularly limited.

One of the second internal electrode layers 132 is provided on a corresponding one of the dielectric layers 20 and is provided so as to be exposed at the first lateral surface WS1 and the second lateral surface WS2 without being exposed at the first end surface LS1 or the second end surface LS2. Specifically, the second internal electrode layer 132 extends between the first lateral surface WS1 and the second lateral surface WS2. More specifically, the second internal electrode layer 132 includes a second counter portion 132A which is opposed to the first internal electrode layer 131, a third extension portion 132B extending from the second counter portion 132A toward the first lateral surface WS1, and a fourth extension portion 132C extending from the second counter portion 132A toward the second lateral surface WS2. The second counter portion 132A is located at the middle portion on the dielectric layer 20. The second counter portion 132A has a rectangular shape so as to extend toward the first end surface LS1 and the second end surface LS2. The third extension portion 132B is exposed at the first lateral surface WS1. The fourth extension portion 132C is exposed at the second lateral surface WS2. The second internal electrode layer 132 is not exposed at the first end surface LS1 or the second end surface LS2. The shapes of the second counter portion 132A, the third extension portion 132B, and the fourth extension portion 132C of the second internal electrode layer 132 are not particularly limited.

In the present embodiment, the first counter portion 131A and the second counter portion 132A are opposed to each other with a corresponding one of the dielectric layers 20 interposed therebetween, such that a capacitance is generated, and the characteristics of a capacitor are realized.

The external electrodes 40 include at least a first external electrode 40A, a second external electrode 40B, and a third external electrode 40C. In the present embodiment, the external electrodes 40 include a first external electrode 40A, a second external electrode 40B, a third external electrode 40C, and further a fourth external electrode 40D.

The first external electrode 40A is provided on the first end surface LS1 and is connected to the first internal electrode layers 131. In other words, the first external electrode 40A is connected to the first internal electrode layers 131, each extending toward the first end surface LS1. More specifically, the first external electrode 40A is connected to the first extension portions 131B of the first internal electrode layers 131. In the present embodiment, the first external electrode 40A extends from the first end surface LS1 to a portion of the first main surface TS1 and to a portion of the second main surface TS2, and to a portion of the first lateral surface WS1 and to a portion of the second lateral surface WS2.

The second external electrode 40B is provided on the second end surface LS2 and is connected to the first internal electrode layers 131. In other words, the second external electrode 40B is connected to the first internal electrode layers 131, each extending toward the second end surface LS2. More specifically, the second external electrode 40B is connected to the second extension portions 131C of the first internal electrode layers 131. In the present embodiment, the second external electrode 40B extends from the second end surface LS2 to a portion of the first main surface TS1 and to a portion of the second main surface TS2, and to a portion of the first lateral surface WS1 and to a portion of the second lateral surface WS2.

The third external electrode 40C is provided on the first lateral surface WS1 and is connected to the second internal electrode layers 132. More specifically, the third external electrode 40C is connected to the third extension portions 132B of the second internal electrode layers 132. In the present embodiment, the third external electrode 40C extends from the first lateral surface WS1 to a portion of the first main surface TS1 and to a portion of the second main surface TS2.

The fourth external electrode 40D is provided on the second lateral surface WS2 and is connected to the second internal electrode layers 132. More specifically, the fourth external electrode 40D is connected to the fourth extension portions 132C of the second internal electrode layers 132. In the present embodiment, the fourth external electrode 40D extends from the second lateral surface WS2 to a portion of the first main surface TS1 and to a portion of the second main surface TS2.

In addition, various layer configurations similar to the external electrode 40 of the first embodiment can be adopted as the layer configuration of the external electrode 40 of the present embodiment, for example.

For example, the first external electrode 40A may include the first base electrode layer 50A, the first plated layer 60A and the first organic layer 70A, and the first plated layer 60A may include the first Ni plated layer 61A and the first Sn plated layer 62A. The second external electrode 40B may include the second base electrode layer 50B, the second plated layer 60B and the second organic layer 70B, and the second plated layer 60B may include the second Ni plated layer 61B and the second Sn plated layer 62B. The third external electrode 40C may include the third base electrode layer 50C, the third plated layer 60C and the third organic layer 70C, and the third plated layer 60C may include the third Ni plated layer 61C and the third Sn plated layer 62C. The fourth external electrode 40D may include the fourth base electrode layer 50D, the fourth plated layer 60D and the fourth organic layer 70D, and the fourth plated layer 60D may include the fourth Ni plated layer 61D and the fourth Sn plated layer 62D. The first base electrode layer 50A, the second base electrode layer 50B, the third base electrode layer 50C, and the fourth base electrode layer 50D may be, for example, fired layers.

As described above, the organic layer 70 according to the present embodiment described with reference to FIGS. 12 and 13 includes the first organic layer 70A, the second organic layer 70B, the third organic layer 70C, and the fourth organic layer 70D.

The first organic layer 70A is provided on the first base electrode layer 50A. The first plated layer 60A is provided on the first organic layer 70A. The first organic layer 70A may also be provided on a portion of the first main surface TS1 and a portion of the second main surface TS2, and a portion of the first lateral surface WS1 and a portion of the second lateral surface WS2, between the first external electrode 40A and the second external electrode 40B, the third external electrode 40C, and the fourth external electrode 40D in the length direction L.

The second organic layer 70B is provided on the second base electrode layer 50B. The second plated layer 60B is provided on the second organic layer 70B. The second organic layer 70B may also be provided on a portion of the first main surface TS1 and a portion of the second main surface TS2, and a portion of the first lateral surface WS1 and a portion of the second lateral surface WS2, between the second external electrode 40B and the first external electrode 40A, the third external electrode 40C, and the fourth external electrode 40D in the length direction L.

The third organic layer 70C is provided on the third base electrode layer 50C. The third plated layer 60C is provided on the third organic layer 70C. The third organic layer 70C may also be provided on a portion of the first lateral surface WS1 between the third external electrode 40C and the first external electrode 40A in the length direction L, and between the third external electrode 40C and the second external electrode 40B in the length direction L. The third organic layer 70C may also be provided on a portion of the first main surface TS1 and a portion of the second main surface TS2.

The fourth organic layer 70D is provided on the fourth base electrode layer 50D. The fourth plated layer 60D is provided on the fourth organic layer 70D. The fourth organic layer 70D may also be provided on a portion of the second lateral surface WS2 between the fourth external electrode 40D and the first external electrode 40A in the length direction L, and between the fourth external electrode 40D and the second external electrode 40B in the length direction L. The fourth organic layer 70D may also be provided on a portion of the first main surface TS1 and a portion of the second main surface TS2.

Therefore, the first organic layer 70A, the second organic layer 70B, the third organic layer 70C, and the fourth organic layer 70D are integrally formed so as to cover the entire portion of the surface of the multilayer body 10 that is exposed from the external electrodes 40. In this way, even with the multi-terminal type including a large number of external electrodes, the organic layer is provided at the end portion of the base electrode layer of each of the external electrodes, which is the starting point of cracks, such that it is possible to obtain the advantageous effect of suppressing cracks. In the case of such a multi-terminal type multilayer ceramic electronic component, it is preferable that the organic layer includes at least the first organic layer 70A and the second organic layer 70B.

In the embodiments of the present invention described above, the multilayer ceramic capacitor in which the dielectric layers 20 made of dielectric ceramic is used as a ceramic layer is exemplified as the multilayer ceramic electronic component. However, the multilayer ceramic electronic component of the present disclosure is not limited thereto. For example, the ceramic electronic component according to the present invention is also applicable to a piezoelectric component using piezoelectric ceramic as a ceramic layer, and various multilayer ceramic electronic components such as a thermistor using semiconductor ceramic as a ceramic layer. Examples of the piezoelectric ceramic include PZT (lead zirconate titanate) ceramic and the like. Examples of the semiconductor ceramic include spinel ceramic and the like.

The multilayer ceramic capacitor 1 according to the embodiments described above achieves the following advantageous effects.

The multilayer ceramic capacitor 1 includes: the multilayer body 10 including the plurality of dielectric layers 20 (the ceramic layers 20) and the plurality of internal electrode layers 30 (the internal conductive layers 30) that are alternately laminated, the first main surface TS1 and the second main surface TS2 that are opposed to each other in the height direction T, the first lateral surface WS1 and the second lateral surface WS2 that are opposed to each other in the width direction W perpendicular or substantially perpendicular to the height direction T, and the first end surface LS1 and the second end surface LS2 that are opposed to each other in the length direction L perpendicular or substantially perpendicular to the height direction T and the width direction W; and the external electrodes 40 connected to the plurality of internal conductive layers 30. The external electrodes 40 include the first external electrode 40A provided on the first end surface LS1 and the second external electrode 40B provided on the second end surface LS2. The first external electrode 40A includes the first base electrode layer 50A provided on the first end surface LS1, the first organic layer 70A provided on the first base electrode layer 50A, and the first plated layer 60A provided on the first organic layer 70A. The second external electrode 40B includes the second base electrode layer 50B provided on the second end surface LS2, the second organic layer 70B provided on the second base electrode layer 50B, and the second plated layer 60B provided on the second organic layer 70B. A surface of the first organic layer 70A is provided as a surface with a portion of the first base electrode layer 50A exposed. A surface of the second organic layer 70B is provided as a surface with a portion of the second base electrode layer 50B exposed. An atomic percentage of a main component metal of the first base electrode layer 50A on the surface of the first organic layer 70A is 4.0 atom% or less. An atomic percentage of a main component metal of the second base electrode layer 50B on the surface of the second organic layer 70B is 4.0 atom% or less.

With such a configuration, it is possible to provide a highly reliable multilayer ceramic electronic component that is able to suppress cracking in the multilayer body 10 of the multilayer ceramic electronic component.

In the multilayer ceramic capacitor 1 according to an embodiment, the atomic percentage of the main component metal of the first base electrode layer 50A on the surface of the first organic layer 70A is 0.6 atom% or more, and the atomic percentage of the main component metal of the second base electrode layer 50B on the surface of the second organic layer 70B is 0.6 atom% or more.

With such a configuration, it is possible to provide a highly reliable multilayer ceramic electronic component, while suppressing the occurrence of plating defects.

In the multilayer ceramic capacitor 1 according to an embodiment, the main component metal of the first base electrode layer 50A and the main component metal of the second base electrode layer 50B are Cu.

With such a configuration, it is possible to provide a highly reliable multilayer ceramic electronic component, while suppressing the diffusion of hydrogen into the internal dielectric layers during manufacturing, preventing deterioration of insulation resistance, and reducing manufacturing costs.

In the multilayer ceramic capacitor 1 according to an embodiment, the first organic layer 70A and the second organic layer 70B are organosilicon compounds.

With such a configuration, reliability is improved because the organic layers are reliably formed on the surfaces of the multilayer body and the base electrode layers of the external electrodes.

In the multilayer ceramic capacitor 1 according to an embodiment, the plurality of internal electrode layers 30 include a plurality of first internal electrode layers 31 that each extend toward the first end surface LS1 and a plurality of second internal electrode layers 32 that each extend toward the second end surface LS2, the first external electrode 40A is connected to the plurality of first internal electrode layers 31, and the second external electrode 40B is connected to the plurality of second internal electrode layers 32.

With such a configuration, it is possible to provide a highly reliable two-terminal type multilayer ceramic electronic component having two external electrodes.

In the multilayer ceramic capacitor 1 according to an embodiment, the external electrodes 40 further include the third external electrode 40C (or the fourth external electrode 40D), the plurality of internal electrode layers 30 include the plurality of first internal electrode layers 131 that each extend toward the first end surface LS1 and the second end surface LS2 and the plurality of second internal electrode layers 132 that each extend toward at least one of the first lateral surface WS1 or the second lateral surface WS2, the first external electrode 40A is connected to the plurality of first internal electrode layers 131 extending toward the first end surface LS1, the second external electrode 40B is connected to the plurality of first internal electrode layers 131 extending toward the second end surface LS2, and the third external electrode 40C (or the fourth external electrode 40D) is connected to the plurality of second internal electrode layers 132.

With such a configuration, it is possible to provide a multi-terminal type multilayer ceramic electronic component having high reliability and a plurality of external electrodes.

The present invention is not limited to the configurations of the above-described embodiments, and can be appropriately modified and applied without changing the gist of the present invention. In addition, a combination of two or more of the individual desirable configurations described in the above embodiments is also included in the present invention.

### [EXPERIMENTAL EXAMPLES]

Experimental examples are described below. Using the manufacturing method described in the above embodiments, multilayer ceramic capacitors having the configuration shown in FIGS. 1 to 5 were manufactured as samples of the Examples and Comparative Examples. Specifically, multilayer ceramic capacitors of a plurality of lots manufactured so that the atomic percentage of the main component metal of the base electrode layer on the surface of the organic layer became different values were manufactured as samples of Examples 1 to 7 and Comparative Examples 1 to 5.

Samples of the same lot were manufactured under the same manufacturing conditions, and the specifications of the external electrodes were the same. One hundred and ten samples were prepared for each lot (Examples 1 to 7 and Comparative Examples 1 to 5). For each lot, among the 110 samples manufactured, 100 samples were checked for the presence of plating defects, and then subjected to a bending strength test. The measurement of the atomic percentage of the main component metal of the base electrode layer on the surface of the organic layer was performed using the remaining 10 samples manufactured in the same lot. The atomic percentage of the main component metal of the base electrode layer on the surface of the organic layer was measured by the measurement method described above, and the average value of 10 samples was used as the measurement result.

Using the manufacturing method according to the above embodiments, multilayer ceramic capacitors having the configurations shown in FIGS. 1 to 5 were manufactured with the following specifications.
- Dimensions of the multilayer ceramic capacitor: L × W × T = 1.0 mm × 0.5 mm × 0.5 mm
- Main component of dielectric layer material: BaTiO₃
- Capacitance: 10 nF
- Internal electrode: Ni
- Configuration of external electrode
- Cu base electrode layer: base electrode layer containing Cu and glass
   Thickness at the middle portion in the height direction located on the first end surface and the second end surface in the cross section of the multilayer body at the 1/2 W position (thickness at the middle of the end surface): 28 µm
   Thickness at the middle portion in the length direction located on the first main surface, the second main surface, the first lateral surface, and the second lateral surface in the cross section of the multilayer body at the 1/2 W position: 10 µm
- Organic layer: after spraying a liquid in which a silane coupling agent was diluted with 2-propanol onto the multilayer body on which the base electrode layer was formed, the chips were spread on an aluminum vat, and heat-treated at 150°C for 30 minutes in an oven to cure. Position provided with the organic layer: the exposed surface of the multilayer body and the surface on the base electrode layer
- Plated layer: formed in two layers, with a Ni plated layer on the base electrode layer on which fatty acid was provided, and a Sn plated layer on the Ni plated layer. Thickness of Ni plating: 4.0 µm
Thickness of Sn plating: 4.0 µm

### <Checking method of crack by bending strength test>

First, the multilayer ceramic capacitors were mounted on a mounting substrate with a thickness of 1.6 mm using solder paste. Then, mechanical stress was applied by bending the substrate with a push rod having a radius of curvature of 1 µm from the back surface of the substrate where the multilayer ceramic capacitor was not mounted. At this time, the deflection amount was set to 2 mm**,** and the substrate was bent for 60 seconds. In this test, the conditions were made more severe than the AEC-Q200 standard required for automotive electronic components.

After bending the substrate, the multilayer ceramic capacitors were removed from the substrate, cross-sectionally polished, and observed for the presence of cracks in the multilayer body. The cross-sectional polishing was performed so that the LT surface connecting the first end surface and the second end surface of the multilayer ceramic capacitor was exposed up to a position at 1/2 of the width direction W of the multilayer ceramic capacitor.

For each lot, if cracks occurred in 10 or more samples out of the 100 samples subjected to the above test, the evaluation result of the bending strength was determined to be NG. If cracks occurred in less than 10 samples, the evaluation result of the bending strength was determined to be OK.

### <Plating defect checking method>

Using a jig, the samples after plating were placed with the end surface side facing upward. Then, the external electrode on the end surface side of the sample was observed under a stereoscopic microscope at a magnification of 50 times to check for the presence of plating defects. Samples in which the base electrode layer was visible (with an occupancy rate of 5% or more) were considered to have plating defects.

### <Experimental data>

Table 1 shows the evaluation results according to Cu (atom%) as the measurement results of the atomic percentage of the main component metal of the base electrode layer on the surface of the organic layer, the number of cracks generated by the bending strength test, and the number of plating defects for the samples of Examples 1 to 7 and Comparative Examples 1 to 5.

**[Table 1]**

| Sample | Cu(atom%) | Number of cracks generated | Bending strength | Number of plating detects generated |
|---|---|---|---|---|
| Comparative Example 1 | 0.0 | 0 | OK | 2 |
| Example 1 | 0.6 | 0 | OK | 0 |
| Example 2 | 0.9 | 3 | OK | 0 |
| Example 3 | 1.4 | 2 | OK | 0 |
| Example 4 | 1.5 | 4 | OK | 0 |
| Example 5 | 1.5 | 4 | OK | 0 |
| Example 6 | 1.7 | 4 | OK | 0 |
| Example 7 | 3.0 | 5 | OK | 0 |
| Comparative Example 2 | 4.6 | 11 | NG | 0 |
| Comparative Example 3 | 5.1 | 10 | NG | 0 |
| Comparative Example 4 | 8.7 | 15 | NG | 0 |
| Comparative Example 5 | 9.5 | 15 | NG | 0 |

According to the above experimental results, good results were obtained for the samples of Examples 1 to 7 in which an organic layer existed on the surface of the base electrode layer, and the atomic percentage of the main component metal of the base electrode layer on the surface of the organic layer was 3.0 atom% or less. Considering these experimental data, it is considered that good results can be achieved by setting the atomic percentage of the main component metal of the base electrode layer on the surface of the organic layer to 4.0 atom% or less. That is, by setting the atomic percentage of the main component metal of the base electrode layer on the surface of the organic layer to 4.0 atom% or less, the deposition of plating of the plated layer provided on the base electrode layer is inhibited, the bonding area between the base electrode layer and the plated layer can be reduced, and good results can be achieved. The atomic percentage of the main component metal of the base electrode layer on the surface of the organic layer is more preferably 3.0 atom% or less.

With such a configuration, since the adhesion strength between the base electrode layer and the plated layer is reduced, it has the effect of promoting peeling between the base electrode layer and the plated layer provided thereon. Therefore, when an impact due to dropping or shock due to thermal cycling is applied to the multilayer ceramic capacitor, it is possible to stably cause peeling between the base electrode layer and the plated layer and to release stress. As a result, it is possible to suppress cracking in the base body of the multilayer ceramic capacitor.

In Comparative Example 1, which is a sample in which the surface of the organic layer is not provided as a surface with a portion of the base electrode layer exposed, the atomic percentage of the main component metal of the base electrode layer on the surface of the organic layer is 0.0 atom%, and plating defects occurred. It is preferable that the surface of the organic layer is provided as a surface with a portion of the base electrode layer exposed, and it is more preferable that the atomic percentage of the main component metal of the base electrode layer on the surface of the organic layer is 0.6 atom% or more. This makes it possible to suppress the occurrence of plating defects. That is, it is preferable that the atomic percentage of the main component metal of the base electrode layer on the surface of the organic layer is 0.6 atom% or more and 4.0 atom% or less. It is more preferable that the atomic percentage of the main component metal of the base electrode layer on the surface of the organic layer is 0.6 atom% or more and 3.0 atom% or less.

<1> A multilayer ceramic electronic component includes: a multilayer body including a plurality of ceramic layers and a plurality of internal conductive layers that are alternately laminated, a first main surface and a second main surface that are opposed to each other in a height direction, a first lateral surface and a second lateral surface that are opposed to each other in a width direction perpendicular or substantially perpendicular to the height direction, and a first end surface and a second end surface that are opposed to each other in a length direction perpendicular or substantially perpendicular to the height direction and the width direction; and external electrodes connected to the plurality of internal conductive layers, in which the external electrodes include a first external electrode provided on the first end surface and a second external electrode provided on the second end surface, the first external electrode includes a first base electrode layer provided on the first end surface, a first organic layer provided on the first base electrode layer, and a first plated layer provided on the first organic layer, the second external electrode includes a second base electrode layer provided on the second end surface, a second organic layer provided on the second base electrode layer, and a second plated layer provided on the second organic layer, a surface of the first organic layer is provided as a surface with a portion of the first base electrode layer exposed, a surface of the second organic layer is provided as a surface with a portion of the second base electrode layer exposed, an atomic percentage of a main component metal of the first base electrode layer on the surface of the first organic layer is 4.0 atom% or less, and an atomic percentage of a main component metal of the second base electrode layer on the surface of the second organic layer is 4.0 atom% or less.
<2> In the multilayer ceramic electronic component as described in <1> above, the atomic percentage of the main component metal of the first base electrode layer on the surface of the first organic layer is **0.6** atom% or more, and the atomic percentage of the main component metal of the second base electrode layer on the surface of the second organic layer is **0.6** atom% or more.
<3> In the multilayer ceramic electronic component as described in <1> or <2> above, the main component metal of the first base electrode layer and the main component metal of the second base electrode layer are Cu.
<4> In the multilayer ceramic electronic component as described in any one of <1> to <3> above, the first organic layer and the second organic layer are organosilicon compounds.
<5> In the multilayer ceramic electronic component as described in any one of <1> to <4> above, the plurality of internal conductive layers include a plurality of first internal conductive layers that each extend toward the first end surface and a plurality of second internal conductive layers that each extend toward the second end surface, the first external electrode is connected to the plurality of first internal conductive layers, and the second external electrode is connected to the plurality of second internal conductive layers.
<6> In the multilayer ceramic electronic component as described in any one of <1> to <4> above, the external electrodes further include a third external electrode, the plurality of internal conductive layers include a plurality of first internal conductive layers that each extend toward the first end surface and the second end surface and a plurality of second internal conductive layers that each extend toward at least one of the first lateral surface or the second lateral surface, the first external electrode is connected to the plurality of first internal conductive layers extending toward the first end surface, the second external electrode is connected to the plurality of first internal conductive layers extending toward the second end surface, and the third external electrode is connected to the plurality of second internal conductive layers.

### EXPLANATION OF REFERENCE NUMERALS

1 multilayer ceramic capacitor (multilayer ceramic electronic component)
10 multilayer body
20 dielectric layer (ceramic layer)
30 internal electrode layer (internal conductive layer)
40 external electrode
40A first external electrode
40B second external electrode
50A first base electrode layer
50B second base electrode layer
60A first plated layer
60B second plated layer
70A first organic layer
70B second organic layer
L length direction
LS1 first end surface
LS2 second end surface
T height direction
TS1 first main surface
TS2 second main surface
W width direction
WS1 first lateral surface
WS2 second lateral surface

## Claims

1. A multilayer ceramic electronic component comprising:
a multilayer body including a plurality of ceramic layers and a plurality of internal conductive layers that are alternately laminated, a first main surface and a second main surface that are opposed to each other in a height direction, a first lateral surface and a second lateral surface that are opposed to each other in a width direction perpendicular or substantially perpendicular to the height direction, and a first end surface and a second end surface that are opposed to each other in a length direction perpendicular or substantially perpendicular to the height direction and the width direction; and
external electrodes connected to the plurality of internal conductive layers, wherein
the external electrodes include a first external electrode provided on the first end surface and a second external electrode provided on the second end surface,
the first external electrode includes a first base electrode layer provided on the first end surface, a first organic layer provided on the first base electrode layer, and a first plated layer provided on the first organic layer,
the second external electrode includes a second base electrode layer provided on the second end surface, a second organic layer provided on the second base electrode layer, and a second plated layer provided on the second organic layer,
a surface of the first organic layer is provided as a surface with a portion of the first base electrode layer exposed,
a surface of the second organic layer is provided as a surface with a portion of the second base electrode layer exposed,
an atomic percentage of a main component metal of the first base electrode layer on the surface of the first organic layer is 4.0 atom% or less, and
an atomic percentage of a main component metal of the second base electrode layer on the surface of the second organic layer is 4.0 atom% or less.

2. The multilayer ceramic electronic component according to claim 1, wherein
the atomic percentage of the main component metal of the first base electrode layer on the surface of the first organic layer is 0.6 atom% or more, and
the atomic percentage of the main component metal of the second base electrode layer on the surface of the second organic layer is 0.6 atom% or more.

3. The multilayer ceramic electronic component according to claim 1 or 2, wherein the main component metal of the first base electrode layer and the main component metal of the second base electrode layer are Cu.

4. The multilayer ceramic electronic component according to any one of claims 1 to 3, wherein the first organic layer and the second organic layer are organosilicon compounds.

5. The multilayer ceramic electronic component according to any one of claims 1 to 4, wherein
the plurality of internal conductive layers include a plurality of first internal conductive layers that each extend toward the first end surface and a plurality of second internal conductive layers that each extend toward the second end surface,
the first external electrode is connected to the plurality of first internal conductive layers, and
the second external electrode is connected to the plurality of second internal conductive layers.

6. The multilayer ceramic electronic component according to any one of claims 1 to 4, wherein
the external electrodes further include a third external electrode,
the plurality of internal conductive layers include a plurality of first internal conductive layers that each extend toward the first end surface and the second end surface, and a plurality of second internal conductive layers that each extend toward at least one of the first lateral surface or the second lateral surface,
the first external electrode is connected to the plurality of first internal conductive layers extending toward the first end surface,
the second external electrode is connected to the plurality of first internal conductive layers extending toward the second end surface, and
the third external electrode is connected to the plurality of second internal conductive layers.
